# EUROPEAN PATENT APPLICATION

(11) **EP 4 756 997 A1**
(43) Date of publication of application: **10.06.2026**
(21) Application number: 25833593.4
(22) Date of filing: 02.07.2025
(51) Int. Cl.: H01M 10/613, H01M 10/6551, H01M 10/6556, H01M 10/656, H01M 50/204

(54) **COOLING DEVICE AND BATTERY PACK COMPRISING SAME**

(30) Priority: 03.07.2024 KR 20240087284
(71) Applicant: LG Energy Solution, Ltd., Seoul 07335 (KR)
(72) Inventor: LEE, Jae Hyun, Daejeon 34122 (KR); KIM, Young Man, Daejeon 34122 (KR); HAN, Nyeon Gu, Daejeon 34122 (KR); KIM, Ki Young, Daejeon 34122 (KR)
(74) Representative: Plasseraud IP
(86) International application number: PCT/KR2025/009392
(87) International publication number: WO 2026/010347

(57) **Abstract**

Disclosed herein relates to a cooling device including: a heat sink including a plurality of cooling channels and a plurality of hollows; and a manifold coupled to the heat sink, wherein the manifold includes: a plurality of sub-flow paths positioned near to the heat sink and corresponding to the plurality of cooling channels, and a plurality of main flow paths on the side far from the heat sink, wherein the plurality of sub-flow paths are branches of the plurality of main flow paths. Some embodiments of the present disclosure can rapidly cool the battery. Accordingly, the stability of the battery can be enhanced, and rapid charging of the battery can be enabled.

## Description

### [Technical Field]

The present disclosure relates to a cooling device and a battery pack including the same.

This application claims the benefit of priority to Korean Patent Application No. 10-2024-0087284, filed on July 3, 2024, and the entire contents of Korean Patent Application No. 10-2024-0087284 are hereby incorporated by reference.

### [Background]

Interest in secondary batteries, which enable long-term repeated use through recharging, is growing to reduce dependence on fossil fuels and decrease carbon emissions. Secondary batteries are used in various fields, including vehicles, portable electronic devices, and ESS (Energy Storage Systems). Therefore, various technologies to enhance the safety of secondary batteries are being researched. Particularly, if a thermal runaway event occurs in a secondary battery, it can lead to major accidents such as fires and explosions. Therefore, the operating temperature of secondary batteries must be maintained at an appropriate level. Furthermore, if the operating temperature of a secondary battery exceeds the appropriate level, it negatively impacts performance aspects such as battery life and capacity. Consequently, extensive research is being conducted on cooling technologies for secondary batteries.

### [Summary]

### [Technical Problem]

The technical problem addressed by the technical concept of the present disclosure is to provide a battery cooling technology.

### [Technical Solution]

Some embodiments of the present disclosure that can solve the above problem are as follows.

A cooling device according to some embodiments includes: a heat sink including a plurality of cooling channels and a plurality of hollows; and a manifold coupled to the heat sink, wherein the manifold includes: a plurality of sub-flow paths positioned a side near to the heat sink and corresponding to the plurality of cooling channels, and a plurality of main flow paths on a side far from the heat sink, wherein the plurality of sub-flow paths are branches of the plurality of main flow paths.

The plurality of cooling channels includes a plurality of first cooling channels and a plurality of second cooling channels, and a cross-sectional area of each of the plurality of second cooling channels is different from a cross-sectional area of each of the plurality of first cooling channels.

A cross-sectional shape of each of the plurality of second cooling channels is different from a cross-sectional shape of each of the plurality of first cooling channels.

The cross-sectional area of each of the plurality of second cooling channels is larger than the cross-sectional area of each of the plurality of first cooling channels, a cross-sectional shape of each of the plurality of second cooling channels is square, rectangular, rounded square, or rounded rectangle, and a cross-sectional shape of each of the plurality of first cooling channels is a circle or an ellipse.

The cross-sectional area of each of the plurality of first cooling channels is identical to a cross-sectional area of each of the plurality of hollows, and the cross-sectional shape of each of the plurality of first cooling channels is identical to a cross-sectional shape of each of the plurality of hollows.

Each of the plurality of main flow paths may branch into three sub-flow paths.

One of the three sub-flow paths may be positioned to correspond with the first cooling channel, and the remaining two sub-flow paths may be positioned to correspond with the second cooling channel.

The one sub-flow path corresponding to the first cooling channel may be positioned between the remaining two sub-flow paths corresponding to the second cooling channels.

The manifold may include a plurality of coupling holes positioned on the side near to the heat sink and on the side far from the heat sink, corresponding to the plurality of hollows.

Each of the plurality of coupling holes located on the side far from the heat sink may be alternately positioned with each of the plurality of main flow paths.

A gasket may be interposed between the heat sink and the manifold.

A battery pack according to some embodiments include: a cooling device; and a battery cell assembly disposed on the cooling device and including a plurality of battery cells, wherein the cooling device includes: a heat sink including a plurality of cooling channels and a plurality of hollows; and a manifold coupled to the heat sink, wherein the manifold includes: a plurality of sub-flow paths positioned on a side near to the heat sink and corresponding to the plurality of cooling channels, and a plurality of main flow paths on a side far from the heat sink, wherein the plurality of sub-flow paths are branches of the plurality of main flow paths.

The plurality of cooling channels includes a plurality of first cooling channels and a plurality of second cooling channels, a cross-sectional area of each of the plurality of second cooling channels is larger than a cross-sectional area of each of the plurality of first cooling channels, a cross-sectional shape of each of the plurality of second cooling channels is square, rectangular, rounded square, or rounded rectangular, and a cross-sectional shape of each of the plurality of first cooling channels may be a circle or an ellipse.

The cross-sectional area of each of the plurality of first cooling channels may be identical to a cross-sectional area of each of the plurality of hollows, and the cross-sectional shape of each of the plurality of first cooling channels may be identical to a cross-sectional shape of each of the plurality of hollows.

Each of the plurality of main flow paths branches into three sub-flow paths, one of the three sub-flow paths is positioned corresponding to the first cooling channel, and the remaining two sub-flow paths are positioned corresponding to the second cooling channels, and the one sub-flow path corresponding to the first cooling channel may be positioned between the remaining two sub-flow paths corresponding to the second cooling channels.

### [Advantageous Effects]

Some embodiments of the present disclosure can rapidly cool the battery. Accordingly, the stability of the battery can be enhanced, and rapid charging of the battery can be enabled.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a cooling device according to some embodiments.
FIG. 2 is an exploded perspective view showing a cooling device according to some embodiments.
FIG. 3 is a perspective view showing a manifold that may be included in the cooling device according to some embodiments.
FIG. 4 is a top view schematically showing a cooling device according to some embodiments.
FIG. 5 is a cross-sectional view taken along the section line V-V' in FIG. 4.
FIG. 6 is a perspective view schematically showing a battery pack according to some embodiments.
FIG. 7 is a perspective view schematically showing the interior of the battery pack according to some embodiments.

### [Best Mode for Carrying out the Disclosure]

The terms and words used herein shall not be interpreted as limited to their conventional or dictionary meanings, but shall be interpreted in a meaning consistent with the technical concept of the present disclosure, based on the principle that the inventor may appropriately define the meaning of terms and words to describe his own invention in the best possible manner.

In this specification, terms such as "include" or "have" are intended to specify the presence of the features, numbers, steps, operations, components, parts, or combinations thereof described herein, and should not be understood as precluding the presence or possibility of adding one or more other features, numbers, steps, operations, components, parts, or combinations thereof. Furthermore, when a layer, film, region, plate, or similar part is described as being "on" another part, this includes not only being "directly above" the other part but also cases where another part exists between them. Conversely, when a layer, film, region, plate, or similar part is described as being "under" another part, this includes not only being "directly below" the other part but also cases where another part exists between them.

The embodiments and drawings are merely examples of the present disclosure and do not represent all the technical ideas of the present disclosure; therefore, it should be understood that various equivalents and modifications may exist that can replace them.

In describing the present disclosure, detailed explanations of known configurations or functions are omitted where such descriptions are deemed to obscure the essence of the present disclosure.

The drawings are provided to more fully explain the present disclosure to those skilled in the art. Therefore, the shapes, sizes, and numbers of components in the drawings may be exaggerated, omitted, or shown schematically for clearer explanation. The shapes, sizes, proportions, and numbers of components in the drawings do not necessarily fully reflect the actual shapes, sizes, proportions, and numbers of the components.

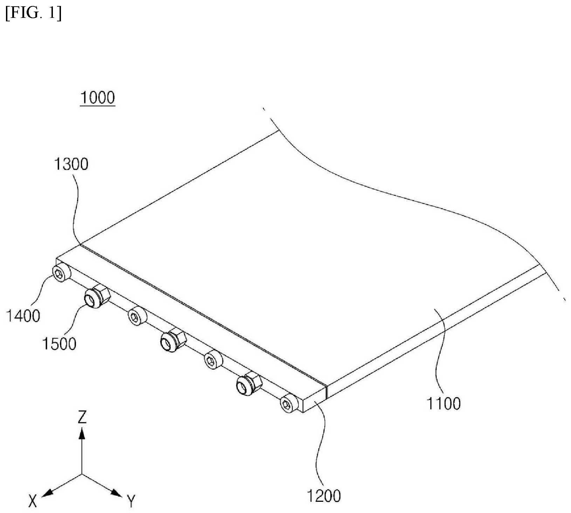

For convenience of description, this specification uses a three-dimensional Cartesian coordinate system to describe the position of components, the shape of components, and the relationships between components. The X-axis, Y-axis, and Z-axis are shown in FIGS. 1 through 7. In this specification, the "X direction" refers to a direction parallel to the X-axis. In this specification, the "Y direction" refers to a direction parallel to the Y-axis. In this specification, the "Z direction" refers to a direction parallel to the Z-axis.

### (First embodiment)

FIG. 1 is a perspective view showing a cooling device according to some embodiments.

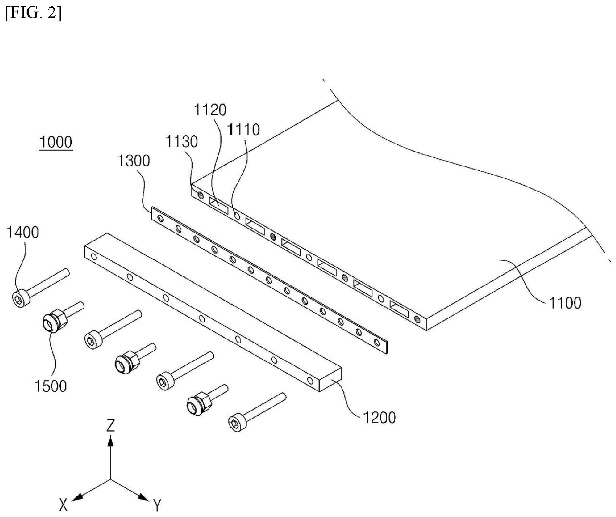

FIG. 2 is an exploded perspective view schematically showing a cooling device according to some embodiments.

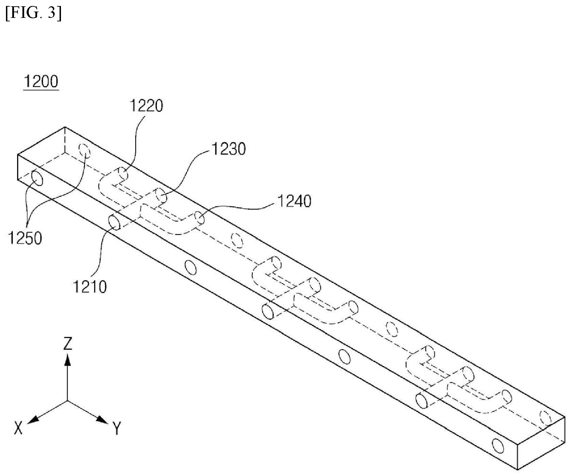

FIG. 3 is a perspective view schematically showing a manifold that may be included in the cooling device according to some embodiments.

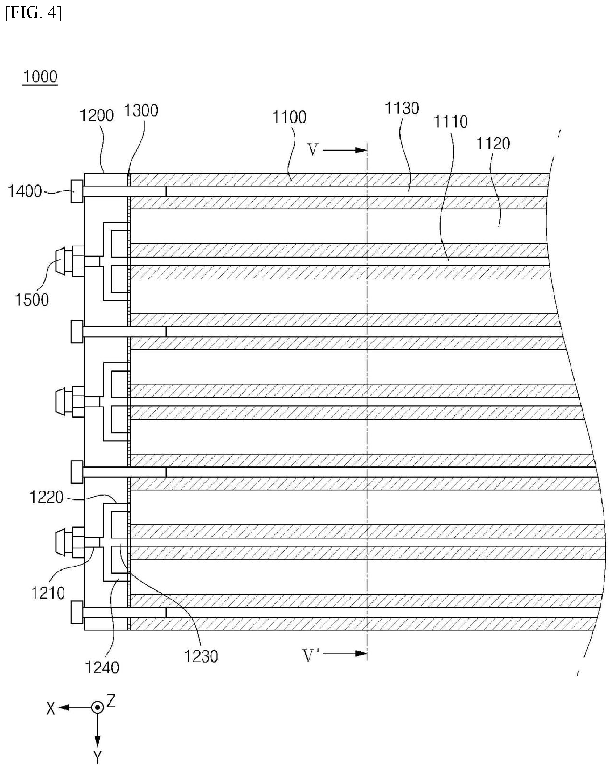

FIG. 4 is a top view schematically showing a cooling device according to some embodiments.

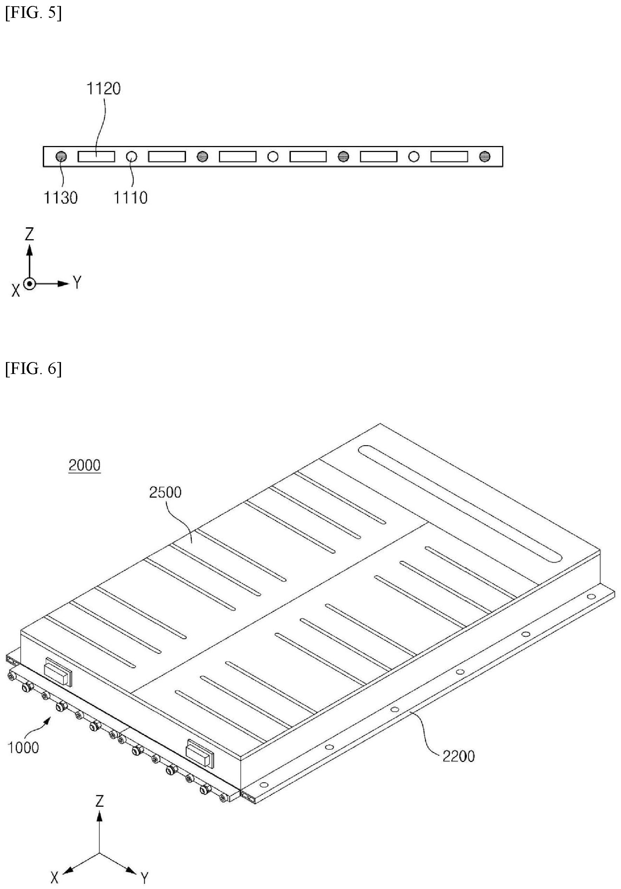

FIG. 5 is a cross-sectional view taken along the section line V-V' of FIG. 4.

Referring to FIGS. 1, 2, and 4, in some embodiments, the cooling device 1000 may include a heat sink 1100, a manifold 1200, a gasket 1300, a plurality of coupling members 1400, and a plurality of connectors 1500.

The heat sink 1100 may be part of a housing that accommodates a heat source (e.g., a plurality of battery cells). The heat sink 1100 may be a support plate configured to support the heat source (e.g., a plurality of battery cells). The heat sink 1100 may be a lid configured to cover the upper part of the heat source (e.g., a plurality of battery cells).

The heat sink 1100 may be manufactured via an extrusion process. The heat sink 1100 may have a seamless structure. The heat sink 1100 may have a plurality of hollows formed therein. The cross-sectional shape of each of the plurality of hollows may be substantially identical to the cross-sectional shape of the discharge port of the die from which each of the plurality of hollows is discharged. Some of the plurality of hollows may be utilized as cooling channels. That is, those of the plurality of hollows utilized as cooling channels may be referred to as cooling channels, and those not utilized as cooling channels may be referred to as hollows.

The plurality of cooling channels can provide a path for a cooling fluid to flow. The cooling fluid can absorb heat from a heat source (such as a plurality of battery cells) and lower the temperature of the heat source (such as a plurality of battery cells). Each of the plurality of hollows can provide a space into which a corresponding one of the plurality of coupling members 1400 can be inserted.

Referring to FIGS. 2, 4, and 5, in some embodiments, the heat sink 1100 may include a plurality of first cooling channels 1110, a plurality of second cooling channels 1120, and a plurality of hollows 1130. The plurality of first cooling channels 1110 may extend in the X direction. The plurality of second cooling channels 1120 may extend in the X direction. The plurality of hollows 1130 may extend in the X direction. Each of the plurality of first cooling channels 1110 may be positioned such that they are spaced apart from each other by a predetermined distance in the Y direction. Each of the plurality of second cooling channels 1120 may be positioned such that they are spaced apart from each other by a predetermined distance in the Y direction. Each of the plurality of hollows 1130 may be positioned such that they are spaced apart from each other by a predetermined distance in the Y direction. Each of the plurality of first cooling channels 1110 may be positioned between two adjacent second cooling channels 1120 from the plurality of second cooling channels 1120. Each of the plurality of first cooling channels 1110 may be positioned alternately with each of the plurality of hollows 1130. Although FIGS. 2, 4, and 5 show hollows 1130 located at both ends of the heat sink 1100, this is merely illustrative. Second cooling channels 1120 may be located at both ends of the heat sink 1100. A hollow 1130 may be located at one end of the heat sink 1100, while a second cooling channel 1120 may be located at the other end of the heat sink 1100.

Referring to FIG. 5, in some embodiments, the cross-sectional area of each of the plurality of first cooling channels 1110 may differ from the cross-sectional area of each of the plurality of second cooling channels 1120. In some embodiments, the cross-sectional shape of each of the plurality of first cooling channels 1110 may differ from the cross-sectional shape of each of the plurality of second cooling channels 1120. In some embodiments, the cross-sectional area of each of the plurality of second cooling channels 1120 may be larger than the cross-sectional area of each of the plurality of first cooling channels 1110. In some embodiments, the cross-sectional shape of each of the plurality of second cooling channels 1120 may be square, rectangular, rounded square, or rounded rectangle. In some embodiments, the cross-sectional shape of each of the plurality of first cooling channels 1110 may be circular or elliptical. In some embodiments, the cross-sectional shape of each of the plurality of hollows 1130 may be a circle or an ellipse. In some embodiments, the cross-sectional area of each of the plurality of first cooling channels 1110 may be substantially equal to the cross-sectional area of each of the plurality of hollows 1130. In some embodiments, the cross-sectional shape of each of the plurality of first cooling channels 1110 may be substantially identical to the cross-sectional shape of each of the plurality of hollows 1130.

The manifold 1200 may be configured to provide a path for the cooling fluid to flow into or out of the plurality of cooling channels of the heat sink 1100. The manifold 1200 may include a plurality of sub-flow paths positioned near to the heat sink 1100 and corresponding to the plurality of cooling channels. Each of the plurality of sub-flow paths may connect to a corresponding one of the plurality of cooling channels. The manifold 1200 may include a plurality of main flow paths on the side distant from the heat sink 1100. The plurality of sub-flow paths may branch from the plurality of main flow paths.

The manifold 1200 enables more of the plurality of hollows formed in the heat sink 1100 to be utilized as cooling channels. That is, the manifold 1200 enables the heat sink 1100 to include not only a plurality of first cooling channels 1110 but also a plurality of second cooling channels 1120. For the heat sink 1100 to include a plurality of second cooling channels 1120 in addition to a plurality of first cooling channels 1110 without the manifold 1200, a cooling port and/or connector corresponding to each of the plurality of first cooling channels 1110 and each of the plurality of second cooling channels 1120 is required. However, installing cooling ports and/or connectors corresponding to each of the plurality of first cooling channels 1110 and each of the plurality of second cooling channels 1120 is extremely difficult due to spatial limitations. Furthermore, if the cross-sectional shapes of each of the plurality of first cooling channels 1110 and each of the plurality of second cooling channels 1120 differ, at least two types of cooling ports and/or connectors are required, which is inefficient.

Referring to FIG. 4, the manifold 1200 may include a plurality of main flow paths 1210. Each of the plurality of main flow paths 1210 may branch into three sub-flow paths 1220, 1230, 1240. The first sub-flow path 1220 may be positioned to correspond with a second cooling channel 1120. The first sub-flow path 1220 may overlap with the corresponding one of the plurality of second cooling channels 1120 in the X direction. The second sub-flow path 1230 may be positioned to correspond with the first cooling channel 1110. The second sub-flow path 1230 may overlap with a corresponding one of the plurality of first cooling channels 1110 in the X direction. The third sub-flow path 1240 may be positioned corresponding to the second cooling channel 1120. The third sub-flow path 1240 may overlap with a corresponding one of the plurality of second cooling channels 1120 in the X direction. The second sub-flow path 1230 may be positioned between the first sub-flow path 1220 and the third sub-flow path 1240. The second sub-flow path 1230 may overlap with the main flow path 1210 from which it branches in the X direction.

Referring to FIGS. 2 through 4, the manifold 1200 may include a plurality of coupling holes 1250 positioned corresponding to a plurality of hollows 1130 on the side closer to the heat sink 1100 and on the side farther from the heat sink 1100. Each of the plurality of coupling holes 1250 may overlap with a corresponding one of the plurality of hollows 1130 in the X direction. The cross-sectional shape of each of the plurality of coupling holes 1250 may be substantially identical to the cross-sectional shape of a corresponding one of the plurality of hollows 1130. The cross-sectional area of each of the plurality of coupling holes 1250 may be substantially identical to the cross-sectional area of the corresponding one of the plurality of hollows 1130. Each of the plurality of coupling holes 1250 located farther from the heat sink 1100 may be alternately positioned with each of the plurality of main flow paths 1210.

A gasket 1300 may be interposed between the heat sink 1100 and the manifold 1200. The gasket 1300 may prevent leakage of the cooling fluid. That is, the gasket 1300 can enable the manifold 1200 to be hermetically coupled to the heat sink 1100. The gasket 1300 may include plurality of holes positioned to correspond with the plurality of coupling holes 1250 located closer to the heat sink 1100. The gasket 1300 may include a plurality of holes positioned to correspond with the first sub-flow path 1220, the second sub-flow path 1230, and the third sub-flow path 1240. In some embodiments, the cooling device 1000 may not include a gasket 1300. In this case, the manifold 1200 may be hermetically coupled to the heat sink 1100 via methods such as welding.

A plurality of coupling members 1400 may couple the manifold 1200 to the heat sink 1100. The plurality of coupling members 1400 may pass through a corresponding pair of the plurality of coupling holes 1250 and be inserted into a corresponding one of the plurality of hollows 1130. As non-limiting examples, the plurality of coupling members 1400 may each be screws or bolts.

Each of the plurality of connectors 1500 may be connected to a corresponding one of the plurality of main flow paths 1210. Each of the plurality of connectors 1500 may be coupled to a corresponding one of the plurality of cooling ports (not shown). As a non-limiting example, each of the plurality of connectors 1500 may be inserted into and coupled with a corresponding one of the plurality of cooling ports (not shown). The plurality of cooling ports (not shown) may be connected to a cooling fluid storing part (not shown) via cooling hoses (not shown). Cooling fluid may be delivered from the cooling fluid storing part (not shown) through the coolant hose (not shown), the plurality of cooling ports (not shown), and the plurality of connectors 1500 in sequence to the plurality of main flow paths 1210. Conversely, the cooling fluid may be delivered from the plurality of main flow paths 1210 to the cooling fluid storing part (not shown) through the plurality of connectors 1500, the plurality of cooling ports (not shown), and the cooling hose (not shown) in sequence.

### (Second embodiment)

A battery pack according to some embodiments may include a cooling device 1000 and a battery cell assembly disposed on the cooling device 1000 and including a plurality of battery cells.

FIG. 6 is a perspective view schematically showing a battery pack according to some embodiments.

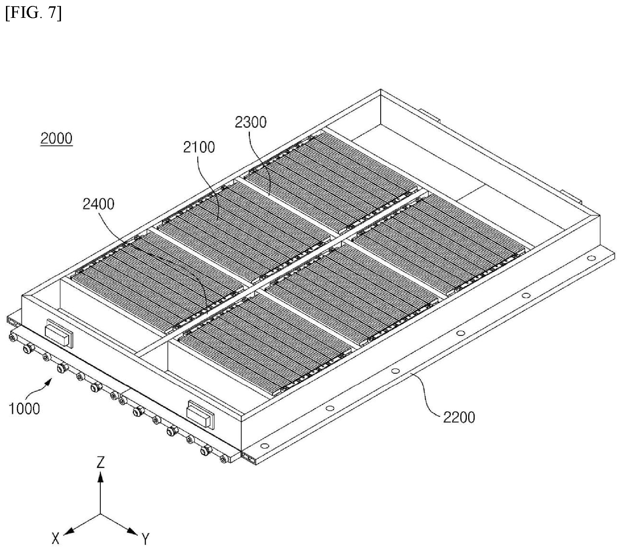

FIG. 7 is a perspective view schematically showing an interior of a battery pack according to some embodiments.

Referring to FIGS. 6 and 7, the battery pack 2000 may include a cooling device 1000, a battery cell assembly 2100, a side wall 2200, a first partition 2300, a second partition 2400, and a lid 2500.

The cooling device 1000 is substantially identical to that described above, so its description is omitted.

The battery cell assembly 2100 may be configured to store energy. The battery cell assembly 2100 may be a cell unit including plurality of battery cells. The battery cell assembly 2100 may not include a module frame. The assembly method of mounting cell units into a battery pack may be referred to as cell-to-pack. A battery pack assembled by cell-to-pack may be referred to as a module-less type battery pack. The battery cell assembly 2100 may be a battery module. A battery module may include a cell unit including a plurality of battery cells and a module frame into which the cell unit is mounted. The assembly method of mounting the cell unit into a module frame with at least one open side and mounting the module frame into the battery pack is also referred to as cell-to-pack.

Each of the plurality of battery cells may be a secondary battery. Each of the plurality of battery cells may be a lithium secondary battery. Each of the plurality of battery cells may be one of a lithium-ion battery, a lithium-ion polymer battery, a lithium metal battery, or a lithium polymer battery. The three-dimensional shape of each of the plurality of battery cells may be cylindrical, prismatic, or pouch-type. The three-dimensional shape of the battery cell refers to the three-dimensional shape of the battery case.

The side wall 2200 may be positioned on the cooling device 1000 to enclose the battery cell assembly 2100, the first partition 2300, and the second partition 2400. The side wall 2200 may provide a space, together with the cooling device 1000, for mounting the battery cell assembly 2100, the first partition 2300, and the second partition 2400. The first partition 2300 may extend in the Y direction. The first partition 2300 may be positioned between battery cell assemblies 2100. The second partition 2400 may extend in the X direction. The second partition 2400 may be positioned between the battery cell assemblies 2100. The lid 2500 may be coupled to the side wall 200 to cover the battery cell assemblies 2100. the side walls 2200, the first partition 2300, and the second partition 2400.

The battery pack 2000 according to some embodiments can rapidly cool the battery cell assembly 2100 because a cooling fluid flowing through a plurality of cooling channels included in the cooling device 1000 can absorb heat even if heat is generated in the battery cell assembly 2100. Accordingly, the battery pack 2000 according to some embodiments exhibits excellent stability and enables rapid charging.

The foregoing description is merely illustrative of the present disclosure. The scope of the present disclosure should be interpreted by the claims, and all technical ideas within the scope of the claims or within the scope of equivalents should be interpreted as falling within the scope of the present disclosure.

### [Description of Reference Numerals]

1000: COOLING DEVICE
1100: HEAT SINK
1110: FIRST COOLING CHANNEL
1120: SECOND COOLING CHANNEL
1130: HOLLOW
1200: MANIFOLD
1210: MAIN FLOW PATH
1220, 1230, 1240: SUB-FLOW PATH
1250: COUPLING HOLE
1300: GASKET
1400: COUPLING MEMBER
1500: CONNECTOR
2000: BATTERY PACK
2100: BATTERY CELL ASSEMBLY
2200: SIDE WALL
2300: FIRST PARTITION
2400: SECOND PARTITION
2500: LID

## Claims

1. A cooling device comprising:
a heat sink comprising a plurality of cooling channels and a plurality of hollows; and
a manifold coupled to the heat sink, wherein
the manifold comprises:
a plurality of sub-flow paths positioned on a side near to the heat sink and corresponding to the plurality of cooling channels, and
a plurality of main flow paths on a side far from the heat sink, wherein
the plurality of sub-flow paths are branches of the plurality of main flow paths.

2. The cooling device of claim 1, wherein
the plurality of cooling channels comprises a plurality of first cooling channels and a plurality of second cooling channels, and
a cross-sectional area of each of the plurality of second cooling channels is different from a cross-sectional area of each of the plurality of first cooling channels.

3. The cooling device of claim 2, wherein
a cross-sectional shape of each of the plurality of second cooling channels is different from a cross-sectional shape of each of the plurality of first cooling channels.

4. The cooling device of claim 2, wherein
the cross-sectional area of each of the plurality of second cooling channels is larger than the cross-sectional area of each of the plurality of first cooling channels,
a cross-sectional shape of each of the plurality of second cooling channels is square, rectangular, rounded square, or rounded rectangle, and
a cross-sectional shape of each of the plurality of first cooling channels is a circle or an ellipse.

5. The cooling device of claim 4, wherein
the cross-sectional area of each of the plurality of first cooling channels is identical to a cross-sectional area of each of the plurality of hollows, and
the cross-sectional shape of each of the plurality of first cooling channels is identical to a cross-sectional shape of each of the plurality of hollows.

6. The cooling device of claim 4, wherein
each of the plurality of main flow paths branches into three sub-flow paths.

7. The cooling device of claim 6, wherein
one of the three sub-flow paths is positioned to correspond with the first cooling channel, and the remaining two sub-flow paths are positioned to correspond with the second cooling channel.

8. The cooling device of claim 7, wherein
the one sub-flow path corresponding to the first cooling channel is positioned between the remaining two sub-flow paths corresponding to the second cooling channels.

9. The cooling device of claim 1, wherein
the manifold comprises a plurality of coupling holes positioned on the side near to the heat sink and on the side far from the heat sink, corresponding to the plurality of hollows.

10. The cooling device of claim 9, wherein
each of the plurality of coupling holes located on the side far from the heat sink is alternately positioned with each of the plurality of main flow paths.

11. The cooling device of claim 1, wherein
a gasket is interposed between the heat sink and the manifold.

12. A battery pack comprising:
a cooling device; and
a battery cell assembly disposed on the cooling device and comprising a plurality of battery cells, wherein
the cooling device comprises:
a heat sink comprising a plurality of cooling channels and a plurality of hollows; and
a manifold coupled to the heat sink, wherein
the manifold comprises:
a plurality of sub-flow paths positioned on a side near to the heat sink and corresponding to the plurality of cooling channels, and
a plurality of main flow paths on a side far from the heat sink, wherein
the plurality of sub-flow paths are branches of the plurality of main flow paths.

13. The battery pack of claim 12, wherein
the plurality of cooling channels comprises a plurality of first cooling channels and a plurality of second cooling channels,
a cross-sectional area of each of the plurality of second cooling channels is larger than a cross-sectional area of each of the plurality of first cooling channels,
a cross-sectional shape of each of the plurality of second cooling channels is square, rectangular, rounded square, or rounded rectangular, and
a cross-sectional shape of each of the plurality of first cooling channels is a circle or an ellipse.

14. The battery pack of claim 13, wherein
the cross-sectional area of each of the plurality of first cooling channels is identical to a cross-sectional area of each of the plurality of hollows, and
the cross-sectional shape of each of the plurality of first cooling channels is identical to a cross-sectional shape of each of the plurality of hollows.

15. The battery pack of claim 13, wherein
each of the plurality of main flow paths branches into three sub-flow paths,
one of the three sub-flow paths is positioned corresponding to the first cooling channel, and the remaining two sub-flow paths are positioned corresponding to the second cooling channels, and
the one sub-flow path corresponding to the first cooling channel is positioned between the remaining two sub-flow paths corresponding to the second cooling channels.
